# EUROPEAN PATENT APPLICATION

(11) **EP 2 980 913 A1**
(43) Date of publication of application: **03.02.2016**
(21) Application number: 13880311.9
(22) Date of filing: 28.03.2013
(51) Int. Cl.: H01M 10/60

(54) **BATTERY MODULE**

(71) Applicant: Hitachi Automotive Systems, Ltd., Hitachinaka-shi, Ibaraki 312-8503 (JP)
(72) Inventor: SUZUKI Takashi, Hitachinaka-shi Ibaraki 312-8505 (JP); KIMURA Michihiro, Hitachi-shi Ibaraki 317-0073 (JP); KOJIMA Naoki, Hitachinaka-shi Ibaraki 312-8505 (JP); EJIRI Yuki, Hitachinaka-shi Ibaraki 312-8505 (JP); SHIMODA Shinsuke, Wako-shi Saitama 351-0113 (JP)
(74) Representative: MERH-IP Matias Erny Reichl Hoffmann Patentanwälte PartG mbB
(86) International application number: PCT/JP2013/059286
(87) International publication number: WO 2014/155609

(57) **Abstract**

The purpose of the present invention is to provide a battery module capable of preventing refrigerant leakage and achieving size reduction while increasing the number of unit batteries by employing a plurality of battery blocks. The battery module (14) of the present invention has a plurality of battery blocks (1) having a plurality of arranged and connected unit batteries (2), the battery module (14) including a cooling plate (12) coupled with the plurality of unit batteries (1) in a heat transmissible manner, and a cooling pipe (18) detachably attached to the cooling plate (12) and disposed endlessly continuously while spanning at least two of the plurality of battery blocks (1).

## Description

### Technical Field

The present invention relates to a battery module including a plurality of battery blocks in which a plurality of battery cells are arranged and connected.

### Background Art

The recent battery modules for vehicles including battery blocks in which a number of unit batteries are arranged generate large amounts of heat due to extremely large charge/discharge currents. As an increase in the temperature of the unit batteries may lead to deterioration in unit battery performance and life, the unit batteries need to be cooled.

In a method for cooling the unit batteries, a cooling plate including a refrigerant flow passageway is disposed in a thermally coupled state with the plurality of unit batteries, and refrigerant is supplied to the cooling plate so as to cool the unit batteries (see Patent Literature 1, for example).

### Citation List

### Patent Literature

Patent Literature 1: JP 2010-277863 A

### Summary of Invention

### Technical Problem

In the battery module described in Patent Literature 1, when a plurality of battery blocks are provided to increase the output voltage, it becomes necessary to couple the cooling pipes, which are refrigerant flow passageways disposed in the respective battery blocks. This results in an increase in the size of the battery module due to the need for leaving a work space and the presence of coupling components.

In addition, the presence of the coupling components in the battery module may lead to leakage of the refrigerant at a position relatively close to the unit batteries in case of application of shock and the like. Depending on the type or leaked amount of the refrigerant, problems such as short-circuit of the unit batteries or their heating and the like may be caused.

The present invention was made in view of the above problems, and an object of the invention is to provide a battery module capable of preventing leakage of refrigerant and the like in the module while achieving a decrease in the size of the module as a whole.

### Solution to Problem

The problem is solved by a battery module according to the present invention including a plurality of battery blocks having a predetermined unit battery arrangement and provided with a cooling plate which is disposed, in a thermally coupled state with respect to a plurality of unit batteries, on the opposite side from the electrode surface of the unit batteries, wherein a cooling pipe is endlessly formed from a refrigerant entry to exit so as to be in a thermally coupled state with respect to the cooling plate of the plurality of battery blocks. The cooling plate is provided with a groove for fitting the cooling pipe, and the cooling pipe is configured to be detachable from the cooling plate.

### Advantageous Effects of Invention

According to the present invention, the components for coupling the cooling pipes are reduced, whereby the interval between a plurality of battery blocks can be decreased. Thus, the size of the battery module can be decreased while employing a plurality of battery blocks. The cooling pipe is endlessly formed from the refrigerant entry to exit, whereby the problem of potential refrigerant leakage from the coupling components within the battery module can be solved.

By employing a plurality of battery blocks including a predetermined number of the arrangements, the number of unit batteries can be increased while ensuring battery module assembly workability and the dimensional accuracy and strength of the components constituting the battery blocks.

Because the cooling pipe is configured to be detachable from the cooling plate, easy assembly can be ensured even when the length of the cooling pipe is large or its shape is complex, or when the number of battery blocks in thermally coupled state is large. Other problems, configurations, and effects will become apparent from the following description of embodiments.

### Brief Description of Drawings

FIG. 1 is a perspective view of a battery block.
FIG. 2 is a perspective view of the battery block of FIG. 1 in a partially exploded state.
FIG. 3 is a partial cross-sectional view of FIG. 2 illustrating a thermally coupled state of a unit battery and a cooling plate.
FIG. 4 is a perspective view of the battery block of FIG. 1 as viewed from the cooling plate side.
FIG. 5 is a perspective view of a unit battery.
FIG. 6 is a perspective view of a battery module according to an embodiment.
FIG. 7 is a perspective view of the battery module of FIG. 6 in a partially exploded state.
FIG. 8 is a perspective view of the battery module of FIG. 6 as viewed from the cooling plate side.
FIG. 9 is a partially exploded perspective view of the battery module of FIG. 8.
FIG. 10 is an overall perspective view illustrating an example of mounting of the battery module on a vehicle.
FIG. 11 illustrates the battery module of FIG. 10 from which outer cases have been removed.
FIG. 12 is an overall perspective view of cooling pipes of the battery module of FIG. 10.
FIG. 13 is a perspective view illustrating a first cooling route.
FIG. 14 is a perspective view illustrating a second cooling route.
FIG. 15 is a perspective view illustrating a cooling pipe connection structure.

### Description of Embodiments

In the following, an embodiment of a battery module according to the present invention will be described with reference to the drawings.

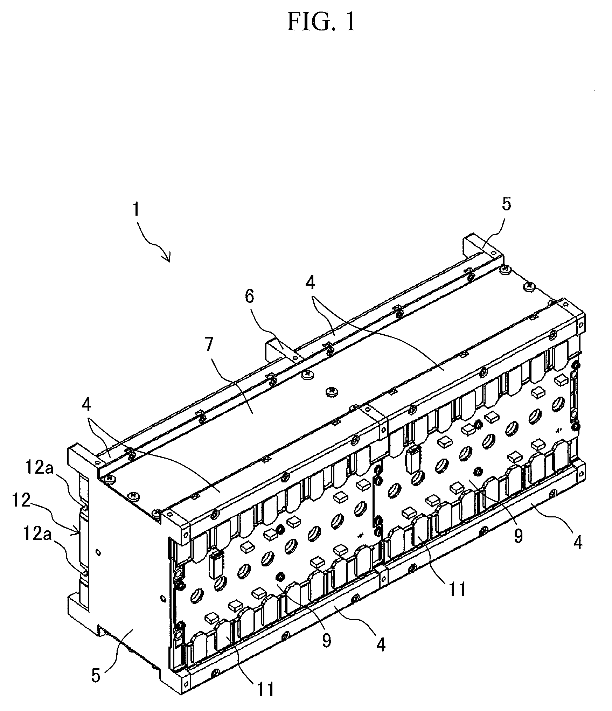

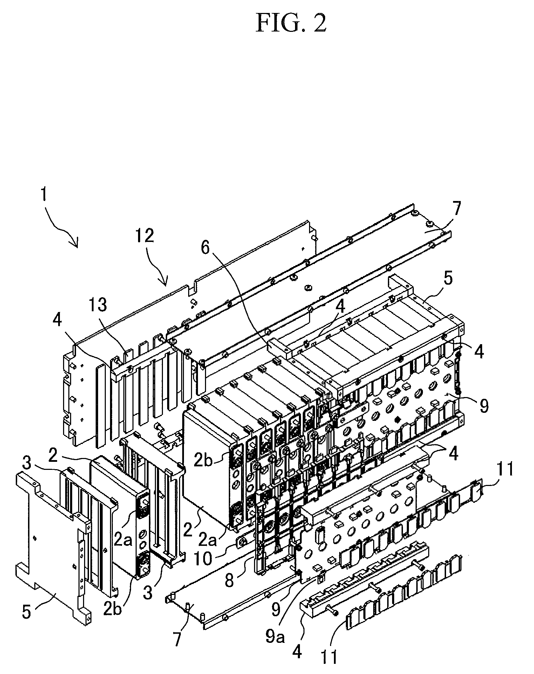

FIG. 1 is a perspective view of the exterior of a battery block according to the present embodiment. FIG. 2 is a perspective view of the battery block of FIG. 1 in a partially exploded state.

The battery block 1, as illustrated in FIG. 2, for example, has a configuration in which a plurality of unit batteries 2 are arranged. The battery block 1 includes a plurality of spacers 3 individually disposed between the plurality of unit batteries 2, and bridge bars 4 extending along the direction in which the plurality of unit batteries 2 are arranged and engaging the plurality of spacers 3.

The battery block 1 includes a pair of aluminum-alloy end plates 5 disposed at both ends in the arranged direction of the plurality of unit batteries 2 and thereby sandwiching the unit batteries from both sides in the arranged direction; an aluminum-alloy section plate 6 disposed at an intermediate position in the arranged direction of the plurality of unit batteries 2 and partitioning the plurality of unit batteries 2 into one and the other side in the arranged direction; and a pair of connection plates 7 disposed along both ends in a width direction of the plurality of unit batteries 2 and extending from one end to the other end in the arranged direction, to which connection plates 7 the pair of end plates 5, the section plate 6, and the bridge bars 4 are respectively secured. The securing may include fastening screws. The top of the unit batteries 2 in a height direction thereof is covered with an insulating cover 8, one on either side of the section plate 6. On top of the insulating cover 8, a substrate unit 9 is disposed.

The plurality of unit batteries 2 are provided with positive external terminals 2a and negative external terminals 2b which are disposed alternately continuously along the arranged direction, with the positive external terminals 2a and the negative external terminals 2b of the adjacent unit batteries being electrically connected respectively by a plurality of bus bars 10. Each of the bus bars 10 is connected to a connection terminal 9a of the substrate unit 9. The substrate unit 9 includes a circuit for measuring the voltage of each unit battery 2, a fuse, and the like. On the upper side of the substrate unit 9 in the height direction of the unit batteries 2, there are provided terminal caps 11 fitted in the insulating cover 8 and covering the terminals of the unit batteries 2.

The battery block 1 is provided with a cooling plate 12. The cooling plate 12 is positioned on the lower side in the battery height direction of the unit batteries 2, and is secured to the end plates 5 and the section plate 6 by fastening screws. Between each of the unit batteries 2 and the cooling plate 12, a heat-conductive sheet 13 is disposed to provide a thermally coupled state coupling the respective unit batteries 2 and the cooling plate 12 in a heat transmissible manner.

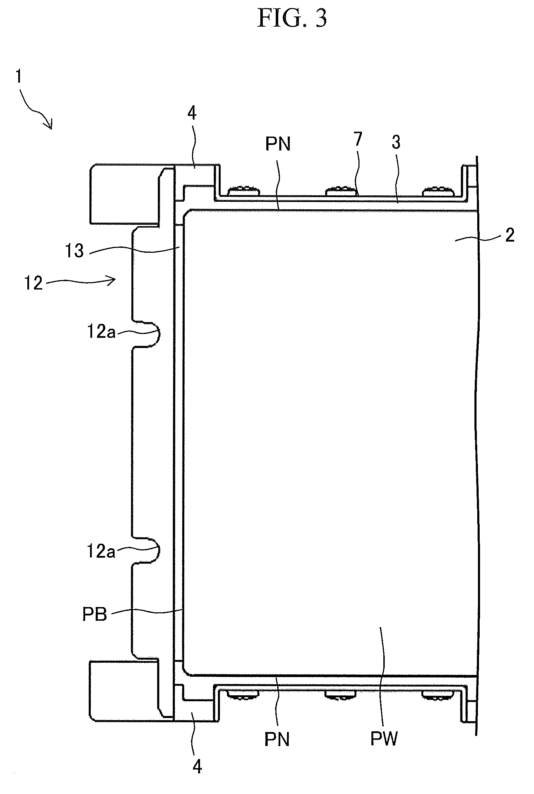

FIG. 3 is a partial cross-sectional view of FIG. 2 illustrating the thermally coupled state of the unit batteries 2 and the cooling plate 12.

Temperature increases in the unit batteries 2 due to charging or discharging are transmitted from the lower side in the height direction of the unit batteries 2 to the cooling plate 12 via the heat-conductive sheet 13. The heat-conductive sheet 13 may include a thermally conductive adhesive as well as a sheet material.

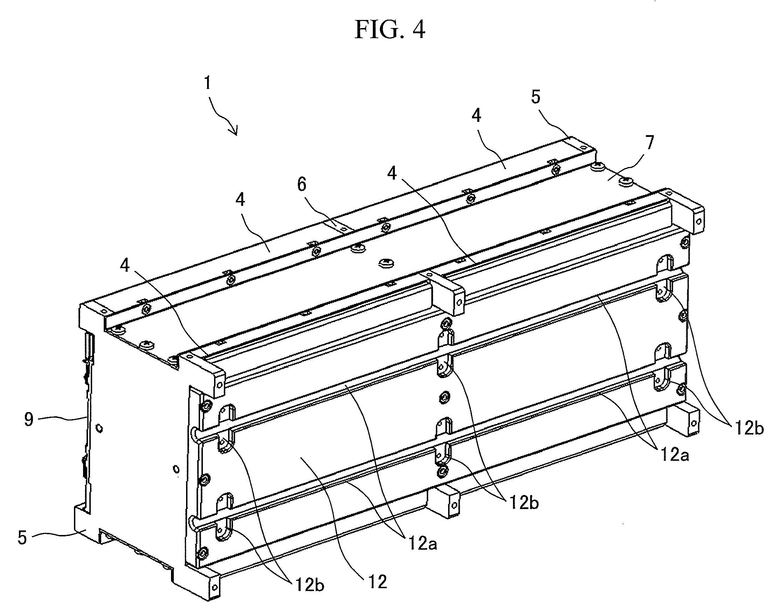

FIG. 4 is a perspective view of the block 1 as viewed from the cooling plate 12 side.

The cooling plate 12 includes a thick-plate member of metal having high heat conductivity, such as aluminum alloy, for example. The cooling plate 12 extends along the battery arranged direction while facing the bottom surface PB (see FIG. 3) of the unit batteries 2. The cooling plate 12 has an approximately rectangular flat-plate shape as viewed in plan, with a height approximately the same as the battery width of the unit batteries 2.

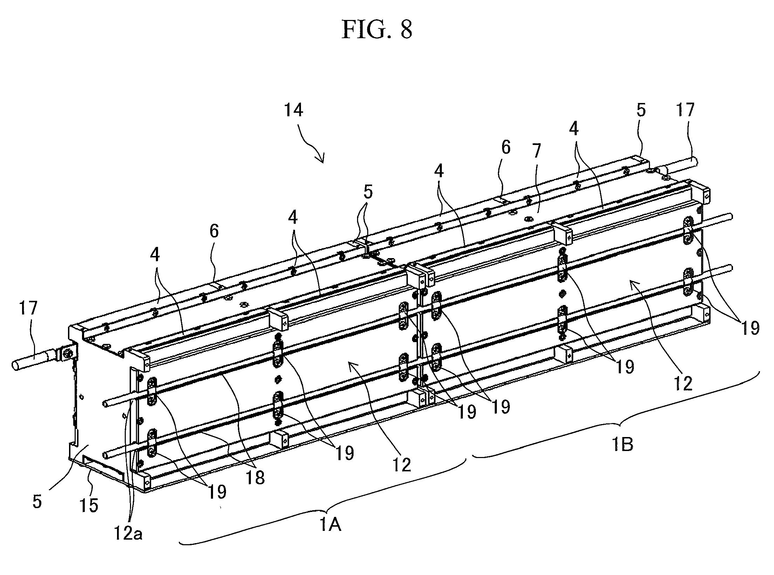

In an exposed surface of the cooling plate 12 exposed to the outside, recessed grooves 12a for fitting cooling pipes 18 (see FIG. 8) are recessed. The recessed grooves 12a have a shape enabling the fitting of at least a part of the cooling pipes 18. In the present embodiment, the recessed grooves 12a have U-shaped cross section allowing the cooling pipes 18 to be almost entirely fitted in the exposed surface. The recessed grooves 12a are parallel with each other at a predetermined interval therebetween in the lateral width direction of the unit batteries 2, while extending between the pair of end plates 5 along the arranged direction of the unit batteries 2. In the exposed surface of the cooling plate 12, there are provided recess portions 12b for fitting and screwing cooling-pipe mounting brackets 19. The recess portions 12b are disposed at predetermined intervals in the length direction of the recessed grooves 12a. The recess portions 12b have a predetermined length in a direction perpendicular to the recessed grooves 12a.

The cooling plate 12 is cooled by the cooling pipes 18 serving as refrigerant flow passageways. The configuration of the cooling pipes 18 will be described later.

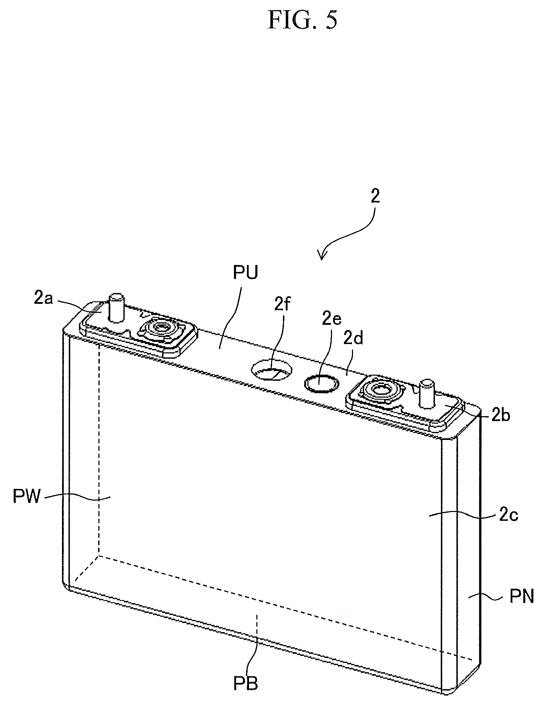

FIG. 5 is a perspective view illustrating a configuration of the unit battery 2.

The unit batteries 2 are lithium ion secondary batteries all having the same configuration. As illustrated in FIG. 5, the unit battery 2 is a flat box-shaped rectangular battery including a positive external terminal 2a and a negative external terminal 2b for voltage input and output. The external terminals 2a and 2b are provided with bolts for fastening the bus bars 10, the structure allowing the bus bars 10 to be secured with nuts. The unit battery 2 is assembled by putting flat electrodes in a rectangular container 2c, sealing the container with a battery lid 2d, and then injecting nonaqueous electrolyte into the rectangular container 2c via an injection opening 2e in the battery lid 2d. The rectangular container 2c has an electrode surface PU provided with the external terminals 2a and 2b; a bottom surface PB having an approximately rectangular shape as viewed in plan and facing the electrode surface PU; a pair of wider side surfaces PW bent from a pair of the long sides of the bottom surface PB and facing each other; and a pair of narrower side surfaces PN bent from a pair of the short sides of the bottom surface PB and facing each other.

In the battery block 1 having this structure, the weight and size of the battery block 1 as a whole can be adjusted by varying the number of the constituent unit batteries 2, while ensuring assembly workability of the battery block 1 and the accuracy and strength of the constituent components.

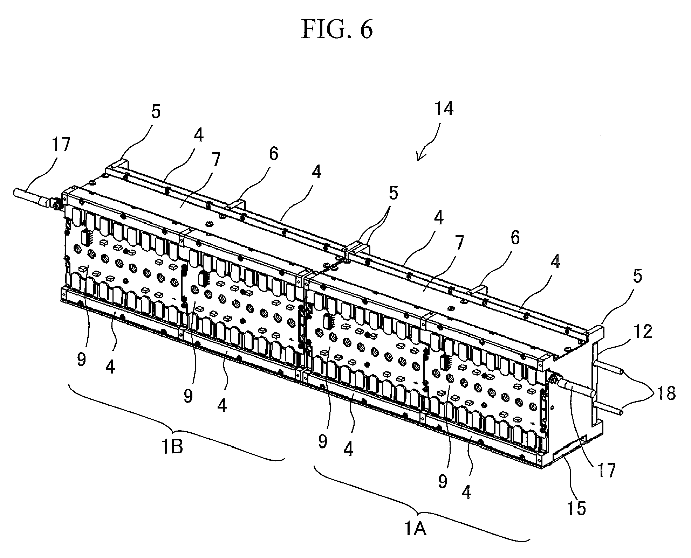

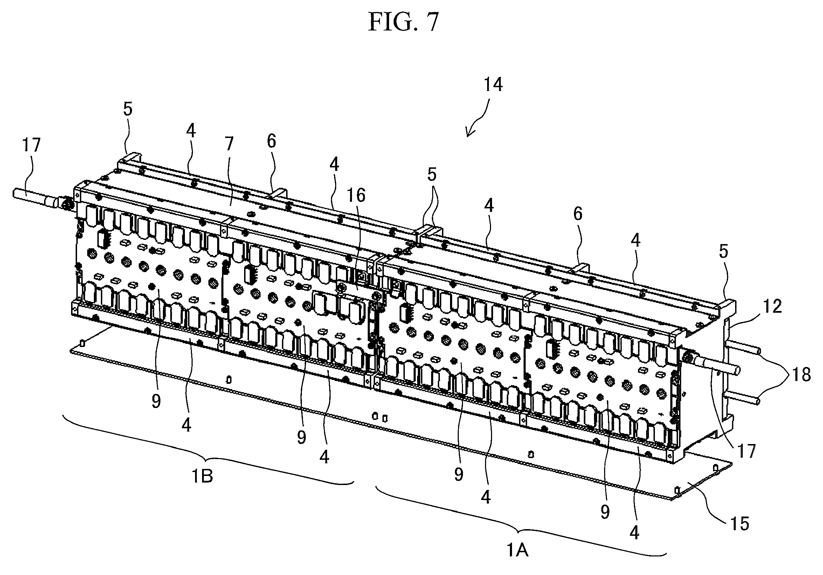

FIG. 6 is a perspective view of the exterior of an embodiment of a battery module. FIG. 7 is a perspective view of the battery module of FIG. 6 in a partially exploded state.

The battery module 14 has a structure in which a plurality of the battery blocks 1 of FIG. 1, specifically two battery blocks 1A and 1B in the present embodiment, are disposed side by side in the arranged direction of the unit batteries 2, with the electrode surface PU side of the unit batteries 2 forming the side surface on one side in a lateral width direction of the battery blocks, and the bottom surface PB side of the unit batteries 2, that is the cooling plate 12 side, forming the side surface on the other side in the lateral width direction of the battery blocks.

The plurality of battery blocks 1 are disposed linearly along the arranged direction in a posture state such that the electrode surface PU of the unit batteries 2 is positioned laterally on one side in the lateral width direction, with the cooling plate 12 positioned laterally on the other side in the lateral width direction.

On the bottom surface of the battery blocks 1A and 1B, there is disposed a base bracket 15 of such a length as to extend throughout the two battery blocks 1A and 1B. The base bracket 15 is secured to the end plates 5 and the section plates 6 of the battery blocks 1A and 1B by fastening screws. Between the two battery blocks 1A and 1B, an inter-block bus bar 16 (see FIG. 7) is provided to electrically connect the battery blocks. In order to provide for battery input and output for the battery module 14, battery input/output lines 17 are connected to the respective battery blocks 1A and 1B.

In the battery module described in Patent Literature 1, when the number of the unit batteries constituting the battery block is increased so as to achieve higher output voltage, the weight of the battery block will be increased, thereby adversely affecting the workability during the assembly of the battery module. In addition, the components constituting the battery block will increase in size, making it difficult to ensure the dimensional accuracy or strength of the components.

In contrast, according to the battery module 14 having the above-described structure, the number of the unit batteries 2 can be increased by providing a plurality of battery blocks 1A and 1B, while ensuring the assembly workability and the accuracy and strength of the components through the use of the battery block 1.

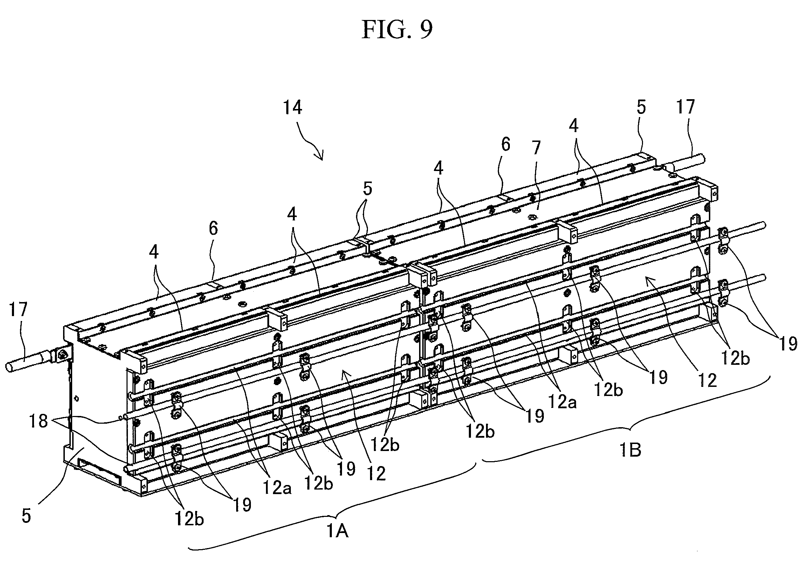

FIG. 8 is a perspective view of the battery module 14 as viewed from the cooling plate 12 side, which is opposite to the side of FIG. 6. FIG. 9 is a perspective view of the battery module of FIG. 8 in a partially exploded state.

The first battery block 1A and the second battery block 1B are disposed such that, by being secured on the base bracket 15, the recessed grooves 12a of the respective cooling plates 12 continuously extend linearly. That is, the recessed grooves 12a are disposed linearly along the arranged direction of the unit batteries 2 while spanning the first battery block 1A and the second battery block 1B.

The cooling pipes 18 are fitted in the recessed grooves 12a of the cooling plates 12a so as to be in a thermally coupled state with respect to the cooling plates 12 of the plurality of battery blocks 1A and 1B. The cooling pipes 18 are endlessly continuous, spanning the first battery block 1A and the second battery block 1B. The cooling pipes 18 do not have a joint serving as a coupling component between the first battery block 1A and the second battery block 1B, and are instead formed continuously and integrally. The location of the cooling pipes 18 is not limited to between the first battery block 1A and the second battery block 1B. Namely, the pipes may be endlessly continuous while spanning at least two of a plurality of battery blocks. For example, when a third battery block (not shown) is disposed continuously with the second battery block 1B, the pipes may be disposed endlessly continuously while spanning the second battery block 1B and the third battery block 1.

The cooling pipes 18 are configured to circulate refrigerant using a refrigerant-circulating and heat-exchange device, which is not shown, so as to cool the cooling plates 12. The cooling pipes 18 are fitted in the recessed grooves 12a provided in the cooling plates 12, and are secured to the cooling plates 12 with the mounting brackets 19 fitted in the recess portions 12b and by fastening screws. The cooling pipes 18 have an outer diameter such that, when secured in the recessed grooves 12a of the cooling plates 12, the outer peripheral surface of the cooling pipes 18 contacts the bottom surface of the recessed grooves 12a having a semi-circular cross section.

In the battery module 14 having the configuration including a plurality of battery blocks 1A and 1B, the coupling component for the cooling pipes 18 between the battery blocks 1A and 1B is eliminated, whereby the space for placing the coupling component between the battery blocks 1A and 1B and the space for a coupling work can be omitted. Accordingly, the interval between the battery blocks 1A and 1B can be reduced and the length of the battery module 14 in the arranged direction can be shortened, thereby enabling a decrease in the size of the battery module 14 as a whole.

By eliminating the coupling component, the problem of potential refrigerant leakage from the coupling component inside the battery module 14 is solved. The battery blocks 1 constituting the battery module 14 are disposed with the cooling plate 12 facing laterally, and the cooling pipes 18, which are endless while spanning the plurality of battery blocks 1A and 1B, are provided in a detachable manner. Accordingly, the battery module 14 can be easily assembled, maintained, or inspected even when the cooling pipes have a large length or a complex shape, or when the number of the battery blocks 1 in thermally coupled state is large.

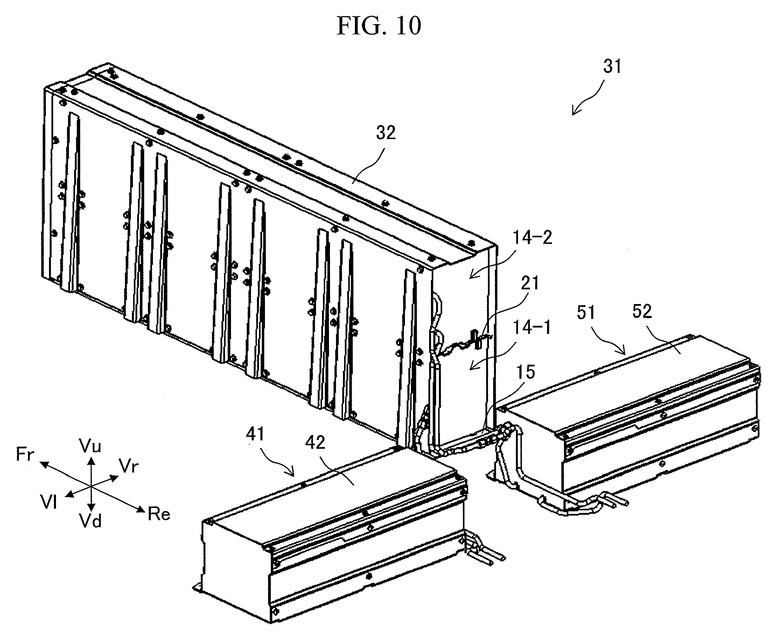

In the following, a specific example of the use of the battery module according to the present embodiment will be described with reference to FIG. 10 to FIG. 15.

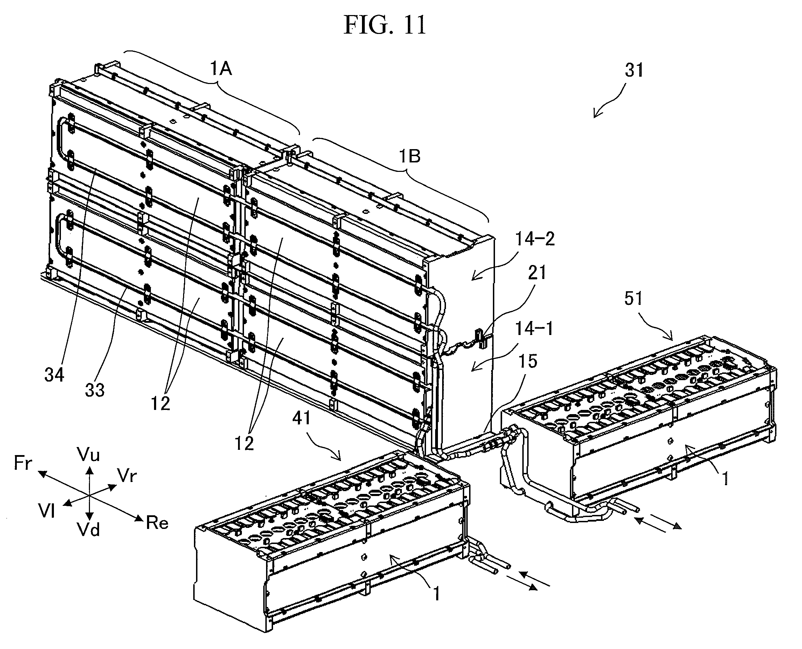

FIG. 10 is an overall perspective view illustrating an example of mounting of the battery module on a vehicle. FIG. 11 illustrates a state of the battery module of FIG. 10 from which the outer cases have been removed. In the drawings, an arrow Fr indicates the front of the vehicle; an arrow Re the rear of the vehicle; an arrow V1 the left side in the vehicle width direction; an arrow Vr the right side in the vehicle width direction; an arrow Vu the top of the vehicle; and an arrow Vd the bottom of the vehicle.

A battery unit 31 is mounted on a vehicle, such as an electric automobile or a hybrid automobile. The battery unit 31 includes battery modules 14-1 and 14-2 disposed in a center console of the vehicle; a battery block 41 (second battery block) disposed under the left rear seat of the vehicle; and a battery block 51 (second battery block) disposed under the right rear seat. The battery modules 14 and the battery blocks 41, 51 are covered with covers 32, 42, and 52, respectively.

The battery modules 14-1 and 14-2 include the battery blocks 1A and 1B stacked in upper and lower tiers in a posture state such that the cooling plate 12 side is disposed laterally on the left side V1 in the vehicle width direction. The battery module 14-1 configured by the lower-tier battery blocks 1A and 1B and the battery module 14-2 configured by the upper-tier battery blocks 1A and 1B are secured to each other by an intermediate bracket 21 provided therebetween. The intermediate bracket 21 is integrally secured to the end plates 5 of the lower-tier battery module 14-1 and the upper-tier battery module 14-2 respectively by fastening screws.

In the lower-tier battery module 14-1, the recessed grooves 12a in the cooling plates 12 of the battery blocks 1A and 1B extend mutually linearly. In the upper-tier battery module 14-2, the recessed grooves 12a in the cooling plates 12 of the battery blocks 1A and 1B extend mutually linearly.

The recessed grooves 12a in the battery blocks 1A of the lower-tier battery module 14-1 and the upper-tier battery module 14-2 extend parallel to each other while being vertically spaced in each cooling plate 12, and are respectively connected vertically continuously at the forward Fr side end of the vehicle.

The battery blocks 41 and 51 are disposed along the vehicle width direction V1 - Vr on the rearward Re side of the vehicle with respect to the battery modules 14-1 and 14-2. The battery blocks 41 and 51 are disposed facing each other via an interval slightly greater than the lateral width of the battery modules 14-1 and 14-2. To the rear of the battery modules 14-1 and 14-2, a predetermined work space portion enclosed on three sides is formed. The battery blocks 41 and 51 are secured to the vehicle in a posture state such that the cooling plate 12 side of the battery blocks 1 is disposed on the lower side Vd of the vehicle.

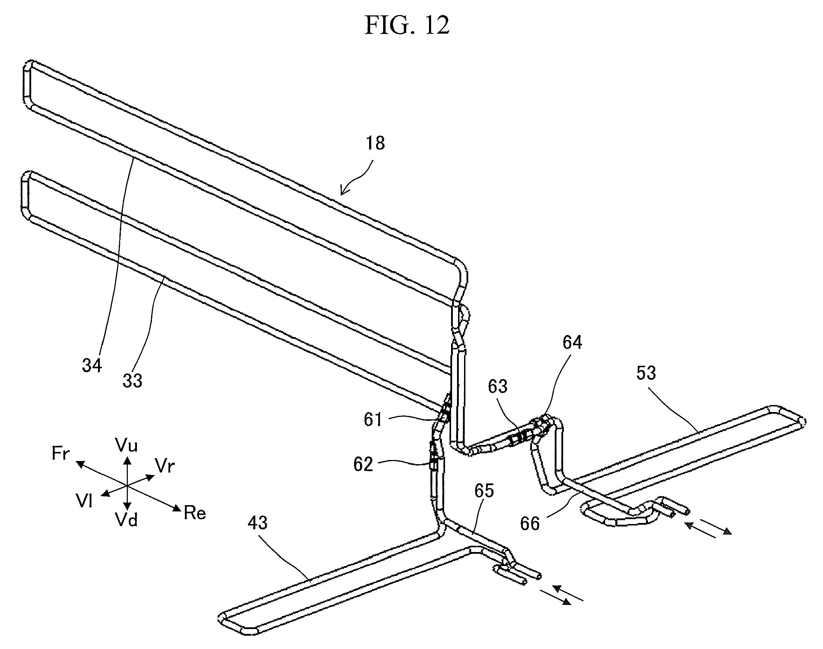

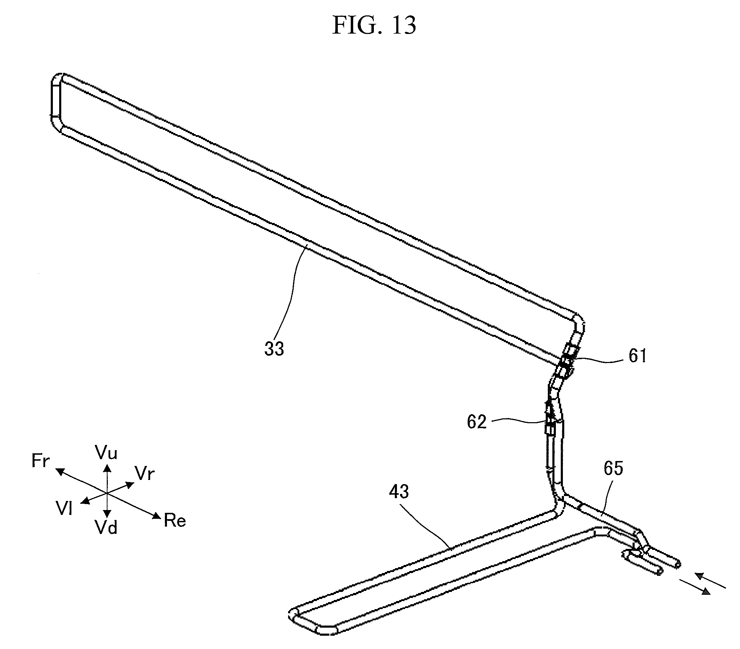

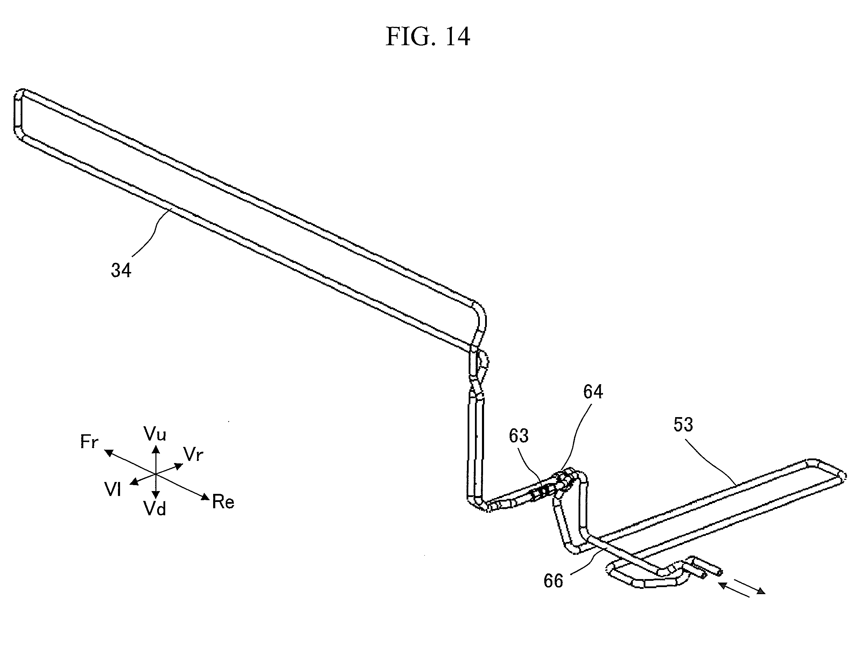

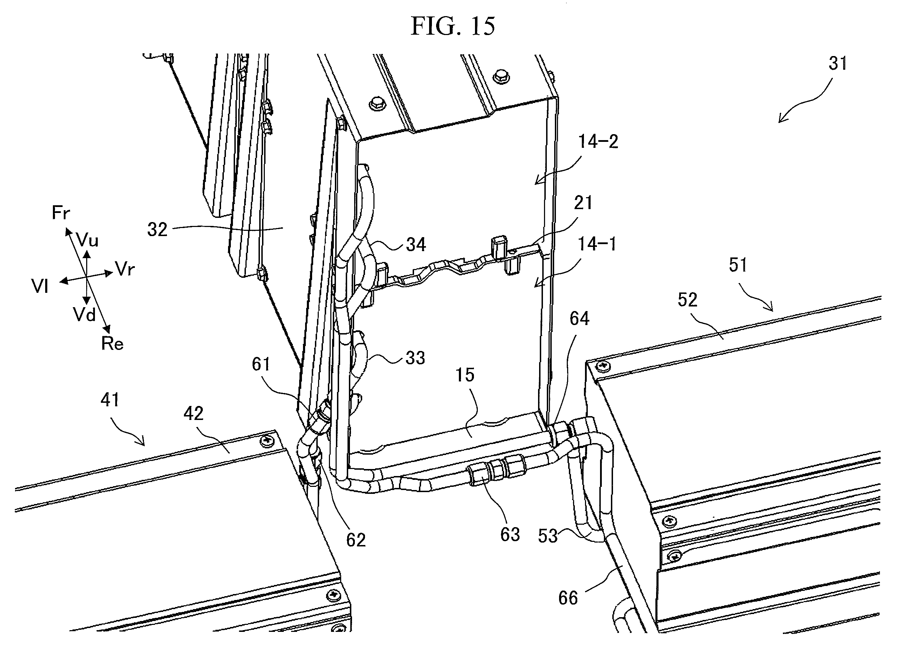

FIG. 12 is an overall perspective view of the cooling pipes of the battery module illustrated in FIG. 10. FIG. 13 is a perspective view illustrating a first cooling route. FIG. 14 is a perspective view illustrating a second cooling route. FIG. 15 is a perspective view illustrating a cooling pipe connection structure.

The cooling pipes 18 include a cooling pipe 33 passing through the lower-tier battery module 14-1, and a cooling pipe 34 passing through the upper-tier battery module 14-2.

The lower-tier battery module 14-1 is disposed with the recessed grooves 12a in the cooling plates 12 of the two battery blocks 1A and 1B extending mutually linearly and continuously. The cooling pipe 33 is fitted in the recessed grooves 12a of each cooling plate 12 so as to be in a thermally coupled state with respect to the cooling plate 12 of each of the battery blocks 1A and 1B, and is endlessly continuous while spanning the first battery block 1A and the second battery block 1B.

The cooling pipe 33 does not include a joint serving as a coupling component between the first battery block 1A and the second battery block 1B, and is instead continuously and integrally formed. The cooling pipe 33 includes an upstream portion extending from the rear end portion of the second battery block 1B toward the vehicle front Fr in the upper recessed groove 12a of the second battery block 1B, and a downstream portion bent in U shape at the front end portion of the first battery block 1A and extending toward the vehicle rear in the lower recessed groove 12a of the second battery block 1B.

The cooling pipe 33 is coupled to a cooling pipe 43 of the battery block 41 disposed under the left rear seat of the vehicle. The battery block 41 under the left rear seat has generally the same configuration as the battery block 1, with the recessed grooves (not shown) formed in the lower surface of the cooling plate 12 in which the cooling pipe 43 is fit. The cooling pipe 43 includes an upstream portion disposed on the vehicle forward side and extending toward the left side V1 in the vehicle width direction, and a downstream portion bent in U shape at the outer position in the vehicle width direction and extending toward the center in the vehicle width direction.

The upstream portion of the cooling pipe 33 is connected to a refrigerant supply pipe 65 by a joint 61 serving as a coupling means. The supply pipe 65 has a proximal end connected to a refrigerant supply opening of a refrigerant-circulating and heat-exchange device, not shown, so as to receive refrigerant supply.

The downstream portion of the cooling pipe 33 and the upstream portion of the cooling pipe 43 are coupled by a joint 62 serving as a coupling means, so that the refrigerant can flow from the cooling pipe 33 to the cooling pipe 43. The downstream portion of the cooling pipe 43 has a proximal end connected to a refrigerant collection opening of the refrigerant-circulating and heat-exchange device, not shown, so as to collect refrigerant.

The upper-tier battery module 14-2 is disposed with the recessed grooves 12a in the cooling plate 12 of each of the two battery blocks 1A and 1B extending mutually linearly and continuously. The cooling pipe 34 is fitted in the recessed grooves 12a of each cooling plate 12 so as to be in a thermally coupled state with respect to the cooling plate 12 of each of the battery blocks 1A and 1B, and is endlessly continuous while spanning the first battery block 1A and the second battery block 1B.

The cooling pipe 34 does not have a joint serving as a coupling component between the first battery block 1A and the second battery block 1B, and is instead continuously and integrally formed. The cooling pipe 34 includes an upstream portion extending from the rear end portion of the second battery block 1B toward the vehicle front Fr in the upper recessed groove 12a of the second battery block 1B, and a downstream portion bent in U shape at the front end portion of the first battery block 1A and extending toward the vehicle rear in the lower recessed groove 12a of the second battery block 1B.

The cooling pipe 34 is coupled to a cooling pipe 53 of the battery block 51 disposed under the right rear seat of the vehicle. The battery block 51 under the right rear seat has generally the same configuration as the battery block 1, with the recessed grooves (not shown) formed in the lower surface of the cooling plate 12 in which the cooling pipe 53 is fit. The cooling pipe 53 includes an upstream portion disposed on the vehicle forward side and extending toward the right side Vr in the vehicle width direction, and a downstream portion bent in U shape at the outer position in the vehicle width direction and extending toward the center in the vehicle width direction.

The upstream portion of the cooling pipe 34 is connected to a refrigerant supply pipe 66 by a joint 63 serving as a coupling means. The supply pipe 66 has a proximal end connected to a refrigerant supply opening of the refrigerant-circulating and heat-exchange device, not shown, so as to receive refrigerant supply.

The downstream portion of the cooling pipe 34 and the upstream portion of the cooling pipe 53 are coupled to each other by a joint 64 serving as a coupling means, so that the refrigerant can flow from the cooling pipe 34 to the cooling pipe 53. The downstream portion of the cooling pipe 53 has a proximal end connected to a refrigerant collection opening of the refrigerant-circulating and heat-exchange device, not shown, so as to collect refrigerant. The illustrated flow of refrigerant is an example, and the upstream side and the downstream side may be switched.

The joints 61 and 62 as the coupling means for the cooling pipes 33 and 43, and the joints 63 and 64 as the coupling means for the cooling pipes 34 and 53 are respectively disposed outside the battery modules 14-1 and 14-2 and within a predetermined work space enclosed by the battery modules 14-1 and 14-2 and the battery blocks 41 and 42.

Accordingly, there is no need to provide a space for locating the joints for the cooling pipes 33 and 34 between the first battery block 1A and the second battery block 1B of the battery modules 14-1 and 14-2, or a work space for performing a joint connecting work there. Thus, the length of the battery modules 14-1 and 14-2 in the front-rear direction can be shortened, whereby the size of the battery modules 14-1 and 14-2 as a whole can be decreased.

Because the coupling components such as joints are not provided within the battery modules 14-1 and 14-2, the problem of refrigerant leakage, e.g., upon the application of shock can be prevented, thus eliminating the possibility of short-circuit in the unit batteries 2, their heating and the like due to the leaked refrigerant. In addition, by locating the joints 61 to 64 in the predetermined work area, a work space for joint coupling work can be ensured, allowing the coupling work to be performed easily.

In the battery unit 31 described above, the coupling components for coupling the cooling pipes 33 and 34 are reduced, whereby the interval between the plurality of battery blocks 1A and 1B can be decreased and the size of the battery modules 14-1 and 14-2 can be reduced while employing a plurality of battery blocks 1. By employing the cooling pipes 33 and 34 endlessly formed from the entry to exit of refrigerant, the problem of potential refrigerant leakage from the coupling components in the battery modules 14-1 and 14-2 can be solved.

By providing a plurality of the battery blocks 1A and 1B including a predetermined number of arrangements, the number of the unit batteries can be increased while ensuring the assembly workability of the battery unit 31 and the dimensional accuracy and strength of the components constituting the battery blocks 1A and 1B.

By enabling the cooling pipes 33 and 34 to be detachable from the cooling plate 12, the battery unit 31 can be easily assembled even when the length of the cooling pipes 33 and 34 is large, their shape is complex, or when the number of the battery blocks 1 in thermally coupled state is large.

While the embodiments of the present invention have been described in detail, the present invention is not limited to the embodiments and may include various design modifications without departing from the spirit of the present invention as set forth in the appended claims. The embodiments are described for the purpose of facilitating an understanding of the present invention, and are not necessarily limited to the embodiments having all of the described elements. A part of the configuration of one embodiment may be substituted by the configuration of another embodiment, or the configuration of the other embodiment may be incorporated into the configuration of the one embodiment. In addition, with respect to a part of the configuration of each embodiment, addition, deletion, or substitution of another configuration may be made.

### Reference Signs List

- 1: Battery block
- 2: Unit battery
- 3: Spacer
- 4: Bridge bar
- 5: End plate
- 6: Section plate
- 7: Connection plate
- 8: Insulating cover
- 9: Substrate unit
- 10: Bus bar
- 11: Terminal cap
- 12: Cooling plate
- 13: Thermoelectric sheet
- 14: Battery module
- 15: Base bracket
- 16: Inter-block bus bar
- 17: Battery input/output line
- 18: Cooling pipe
- 19: Mounting bracket

## Claims

1. A battery module including a plurality of battery blocks having a plurality of arranged and connected unit batteries,
the battery module comprising:
a cooling plate coupled with the plurality of unit batteries in a heat transmissible manner; and
a cooling pipe detachably attached to the cooling plate and endlessly and continuously spanning at least two of the plurality of battery blocks.

2. The battery module according to claim 1, wherein the cooling plate includes a recessed groove configured to fit at least a part of the cooling pipe.

3. The battery module according to claim 2, wherein the plurality of battery blocks are disposed side by side along an arranged direction of the unit batteries in a posture state such that an electrode surface of the unit batteries is positioned laterally on one side in a lateral width direction, with the cooling plate positioned laterally on the other side in the lateral width direction.

4. The battery module according to claim 3, wherein the recessed groove is provided in an exposed surface of the cooling plate, the recessed groove extending linearly and spanning the plurality of battery blocks.

5. The battery module according to claim 4, comprising a base bracket for securing the plurality of battery blocks.

6. The battery module according to claim 5, wherein the plurality of battery blocks are stacked vertically in a plurality of tiers.

7. The battery module according to claim 6, comprising an intermediate bracket disposed between a lower-tier battery block and an upper-tier battery block and securing both the lower-tier battery block and the upper-tier battery block.

8. The battery module according to claim 7 configured to be disposed in a center console of a vehicle.

9. A battery unit comprising the battery module according to claim 8 and a second battery block disposed under a rear seat of the vehicle,
wherein the cooling pipe of the battery module and a cooling pipe of the second battery block are coupled by a coupling member in a space portion formed between the battery module and the second battery block.
